# EUROPEAN PATENT APPLICATION

(11) **EP 3 940 513 A1**
(43) Date of publication of application: **19.01.2022**
(21) Application number: 20813978.2
(22) Date of filing: 09.03.2020
(51) Int. Cl.: G06F 3/041, G06F 3/044

(54) **TOUCH PANEL**

(30) Priority: 24.05.2019 JP 2019097788
(71) Applicant: Japan Aviation Electronics Industry, Limited, Tokyo 150-0043 (JP)
(72) Inventor: DANNO, Makoto, Tokyo 150-0043 (JP); KITAMURA, Yuji, Tokyo 150-0043 (JP); AKIZUKI, Joji, Tokyo 150-0043 (JP)
(74) Representative: Prüfer & Partner mbB Patentanwälte · Rechtsanwälte
(86) International application number: PCT/JP2020/009999
(87) International publication number: WO 2020/240978

(57) **Abstract**

This touch panel 10 includes an electrode layer 14 made of a conductive mesh 30, and provided with a first electrode 21, a second electrode 23, and a dummy electrode 25. The first electrode 21 has a first facing part 213, and the first facing part 213 is formed in a first region 41. The second electrode 23 has a second facing part 233, and the second facing part 233 is formed in a second region 43. The first facing part 213 and the second facing part 233 face each other and are separated from each other in a predetermined direction. The dummy electrode 25 has an interposition part 251 located at least partially between the first facing part 213 and the second facing part 233. The interposition part 251 is formed in a dummy region 45, and the dummy region 45 has a first end portion region 451 and a second end portion region 453 as both end regions in a predetermined direction. The first region 41 and the first end portion region 451 overlap each other, and the second region 43 and the second end portion region 453 overlap each other.

## Description

### Technical Field

This invention relates to a touch panel, in particular, to a mutual capacitive system touch panel.

### Background Art

Patent Document 1 discloses an example of a mutual capacitive system touch panel (hereinafter referred to as a touch panel). The touch panel of Patent Document 1 has a plurality of sensor portions, and each of the sensor portions is provided with an electrode layer formed on a base member. As shown in Fig. 12, the electrode layer disclosed in Patent Document 1 has a first electrode 91, a second electrode 93 and a dummy electrode 95. Each of the first electrode 91 and the second electrode 93 is formed to have a comb teeth-like shape. Comb teeth (first line-like parts) 911 of the first electrode 91 and comb teeth (second line-like parts) 931 of the second electrode extend in a perpendicular direction perpendicular to a predetermined direction. Moreover, the first line-like parts 911 and the second line-like parts 931 are alternately arranged in the predetermined direction. The dummy electrode 95 is arranged between the first electrode 91 and the second electrode 93.

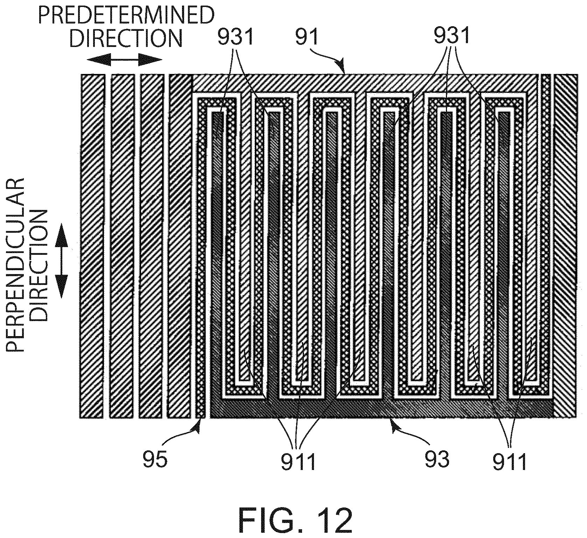

As understood from Fig. 12, the first electrode 91 and the second electrode 93 form a capacitor. When a conductor, such as a finger, comes close to a surface of the capacitor, capacitance of the capacitor is varied. By detecting variation of the capacitance of the capacitor, the touch panel of Patent Document 1 can detect approach of the conductor to the sensor portion.

### Prior Art Documents

### Patent Document(s)

Patent Document 1: JP2018-112842A

### Summary of Invention

### Technical Problem

Patent Document 1 discloses that sensitivity of the sensor portion can be increased by widening intervals between the first line-shape parts 911 and the second line-shape parts 931 in the predetermined direction. However, widening the intervals between the first line-like parts 911 and the second line-like parts 931 in the touch panel or the sensor portion causes expansion of a size of the touch panel or the sensor portion. As a result, resolution of the touch panel or the sensor portion is reduced. Accordingly, there is a demand to provide a touch panel which can improve sensitivity of a touch panel or a sensor portion thereof without reducing resolution of the touch panel or the sensor portion.

It is therefore an object of the present invention to provide a touch panel which can improve sensitivity thereof without reducing resolution thereof.

### Solution to Problem

One aspect of the present invention provides a touch panel comprising a base member and an electrode layer formed on the base member, wherein:
the electrode layer is made of a conductive mesh and comprises a first electrode, a second electrode and a dummy electrode;
the first electrode has a first facing portion;
the first facing portion is formed in a first area;
the second electrode has a second facing portion;
the second facing portion is formed in a second area;
the first facing portion and the second facing portion are apart from each other and face each other in a predetermined direction;
the dummy electrode has an intervening portion located between the first facing portion and the second facing portion at least in part;
the intervening portion is formed in a dummy area;
the dummy area has a first end area and a second end area as both end areas thereof in the predetermined direction;
the first area and the first end area overlap with each other; and
the second area and the second end area overlap with each other.

### Advantageous Effects of Invention

Resolution of the touch panel of the present invention depends on an interval between the first area and the second area. On the other hand, sensitivity of the touch panel of the present invention depends on a width of the intervening portion in the predetermined direction. As apparent from what the first end region and the second end region overlap with the first region and the second region, respectively, the width of the intervening portion is wider than the interval between the first region and the second region. Accordingly, the touch panel of the present invention can achieve higher detection sensitivity in comparison with a touch panel in which a first end region of an intervening portion and a second end region of the intervening portion do not overlap with a first region and a second region, respectively. Thus, the touch panel of the present invention can improve the detection sensitivity without reducing the resolution.

An appreciation of the objectives of the present invention and a more complete understanding of its structure may be had by studying the following description of the preferred embodiment and by referring to the accompanying drawings.

### Brief Description of Drawings

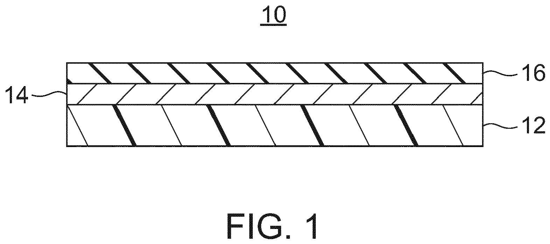

Fig. 1 is a cross-sectional view showing a schematic structure of a mutual capacitive system touch panel (a touch panel) according to a first embodiment of the present invention.

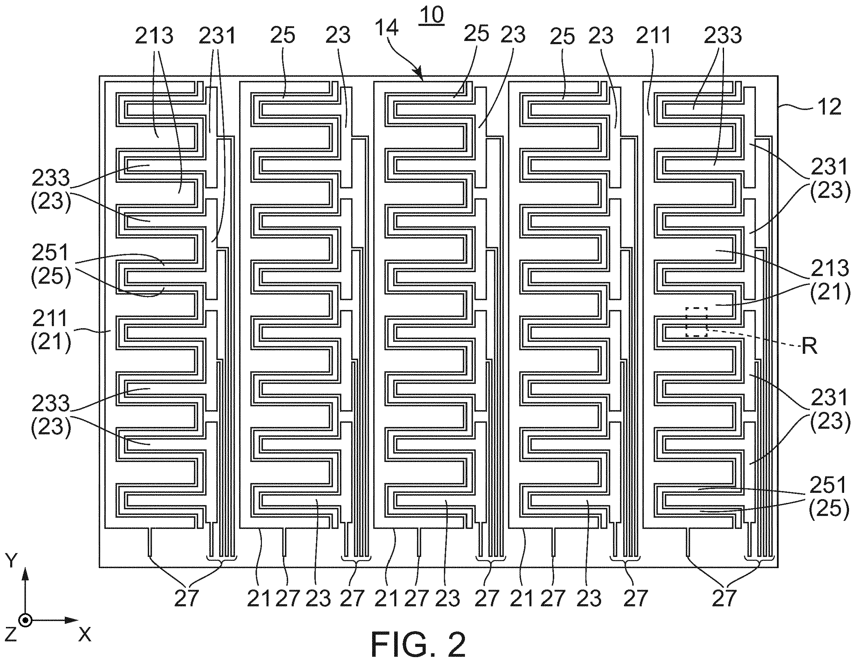

Fig. 2 is a plan view showing the touch panel of Fig. 1. First electrodes, second electrodes, dummy electrodes and wirings are simplified and depicted. A protective layer is omitted.

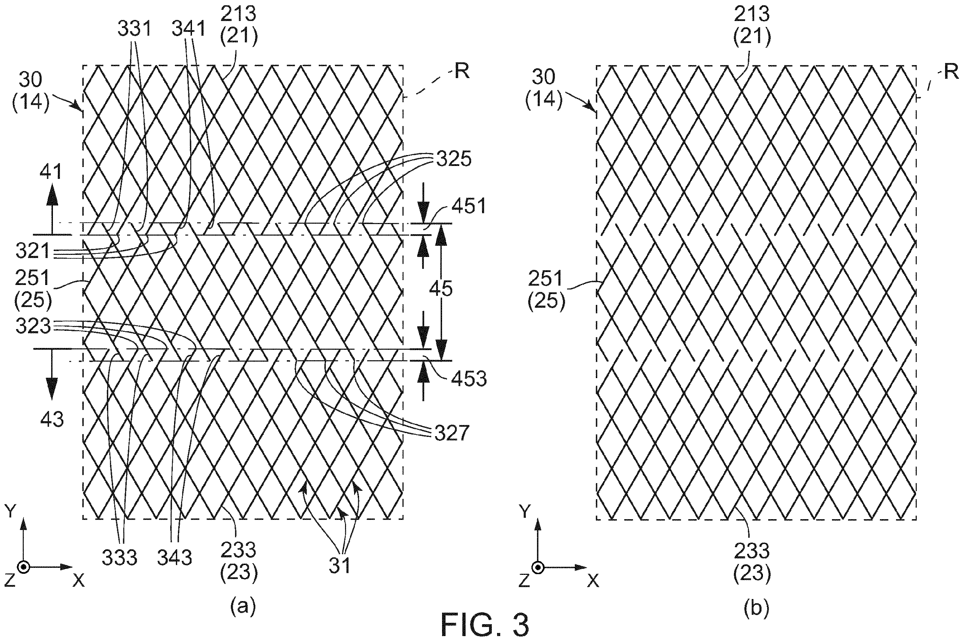

Figs. 3 (a) and 3 (b) are expanded views each of which shows a range R surrounded by a broken line in the touch panel of Fig. 2, where Fig. 3 (a) is a diagram to which reference numerals necessary for the explanation are added, and where Fig. 3 (b) is a diagram identical to Fig. 3 (a) from which the reference numerals are removed in part.

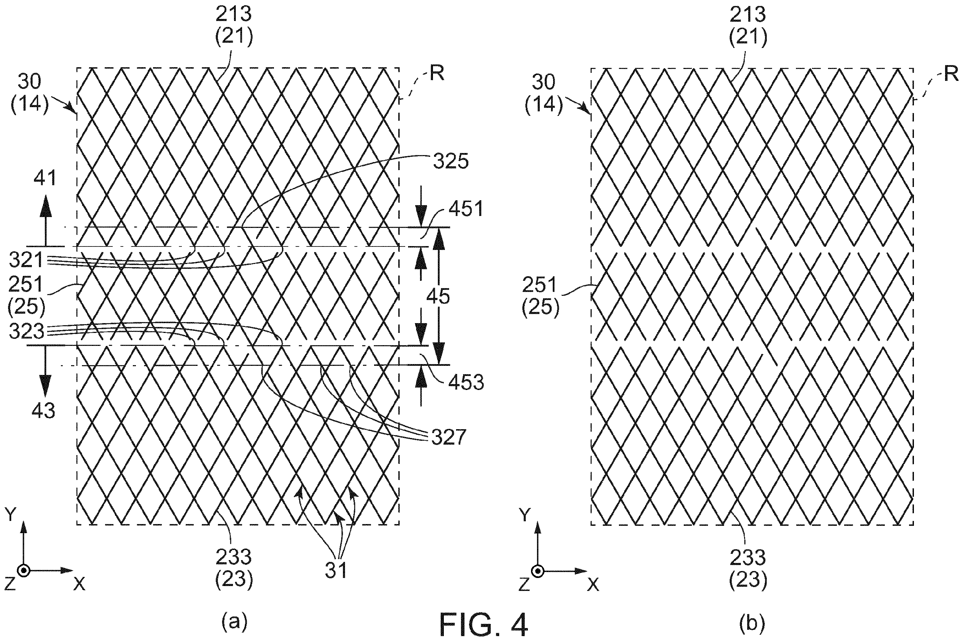

Figs. 4 (a) and 4(b) are diagrams each of which shows a first modified example of a conductive mesh shown in Figs. 3 (a) and 3 (b), where Fig. 4 (a) is a diagram to which reference numerals necessary for the explanation are added, and where Fig. 4 (b) is a diagram identical to Fig. 4 (a) from which the reference numerals are removed in part.

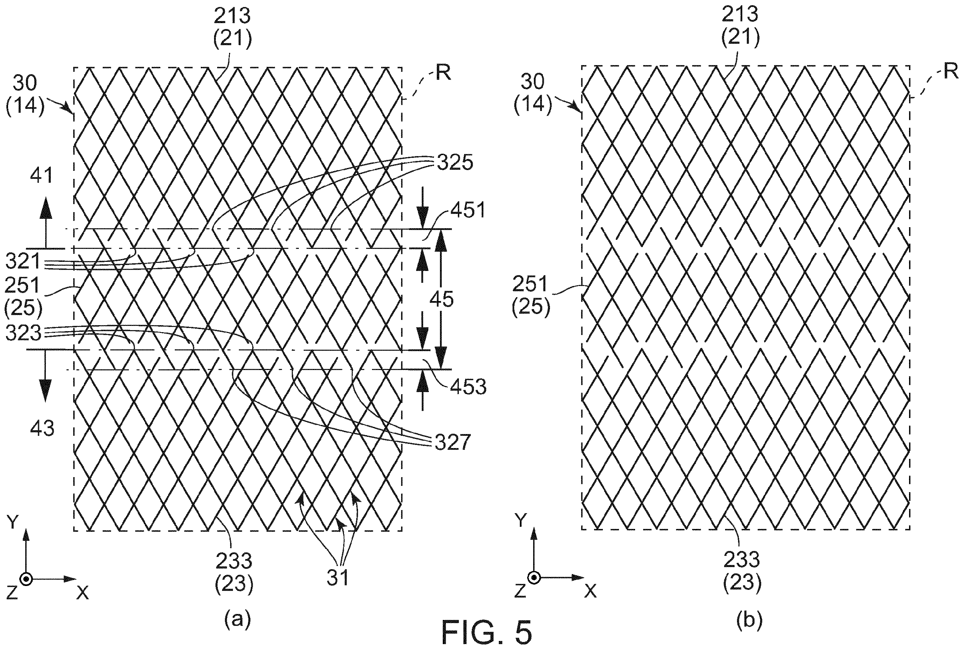

Figs. 5 (a) and 5 (b) are diagrams each of which shows a second modified example of the conductive mesh shown in Figs. 3 (a) and 3 (b), where Fig. 5 (b) is a diagram to which reference numerals necessary for the explanation are added, and where Fig. 5 (b) is a diagram identical to Fig. 5 (a) from which the reference numerals are removed in part.

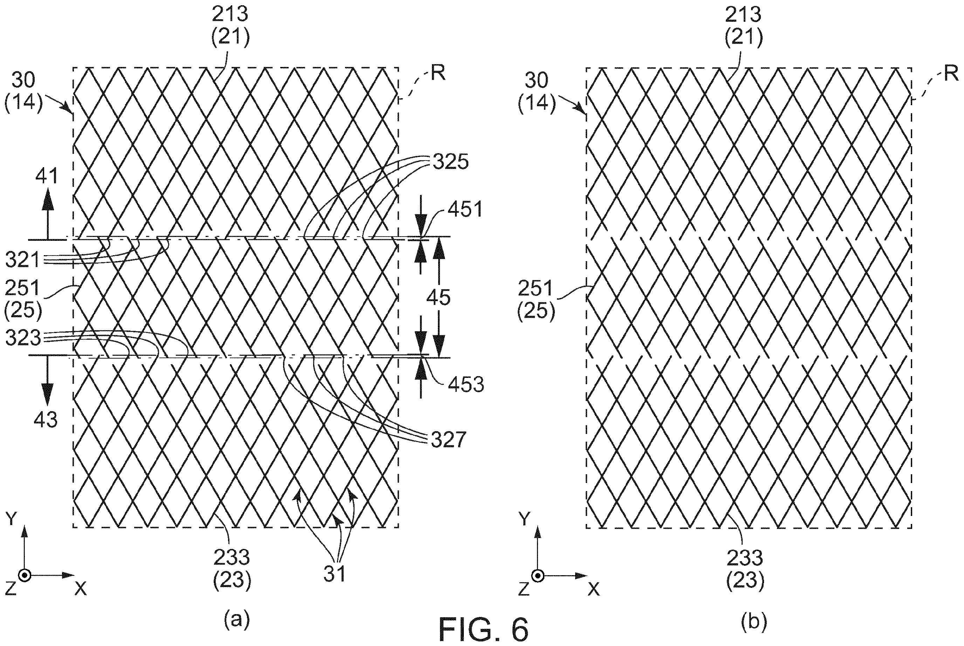

Figs. 6 (a) and 6 (b) are diagrams each of which shows a third modified example of the conductive mesh shown in Figs. 3 (a) and 3 (b), where Fig. 6 (b) is a diagram to which reference numerals necessary for the explanation are added, and where Fig. 6 (b) is a diagram identical to Fig. 6 (a) from which the reference numerals are removed in part.

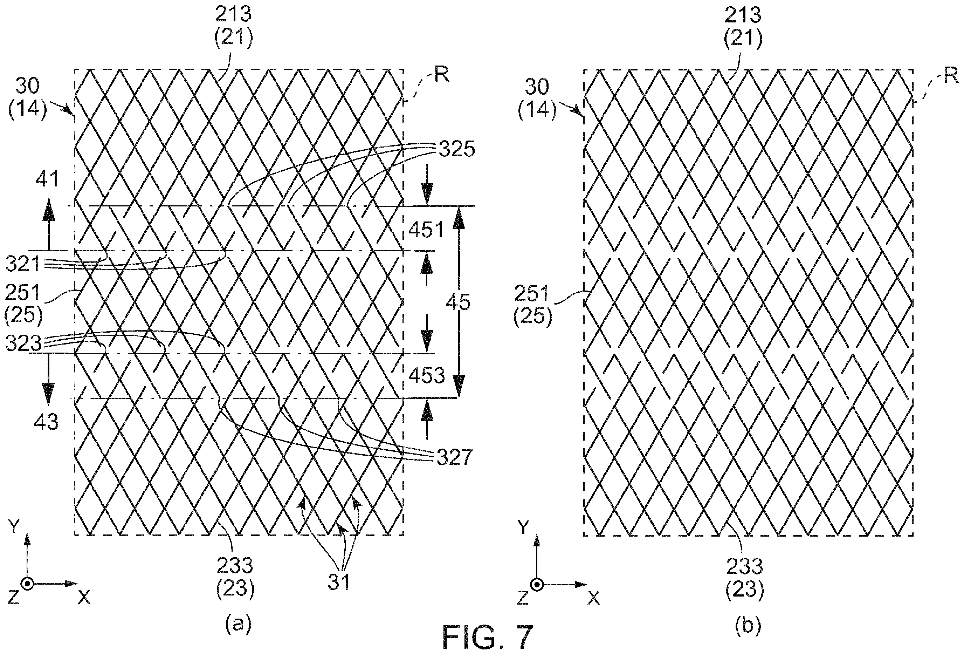

Figs. 7 (a) and 7 (b) are diagrams each of which shows a fourth modified example of the conductive mesh shown in Figs. 3 (a) and 3 (b), where Fig. 7 (b) is a diagram to which reference numerals necessary for the explanation are added, and where Fig. 7 (b) is a diagram identical to Fig. 7 (a) from which the reference numerals are removed in part.

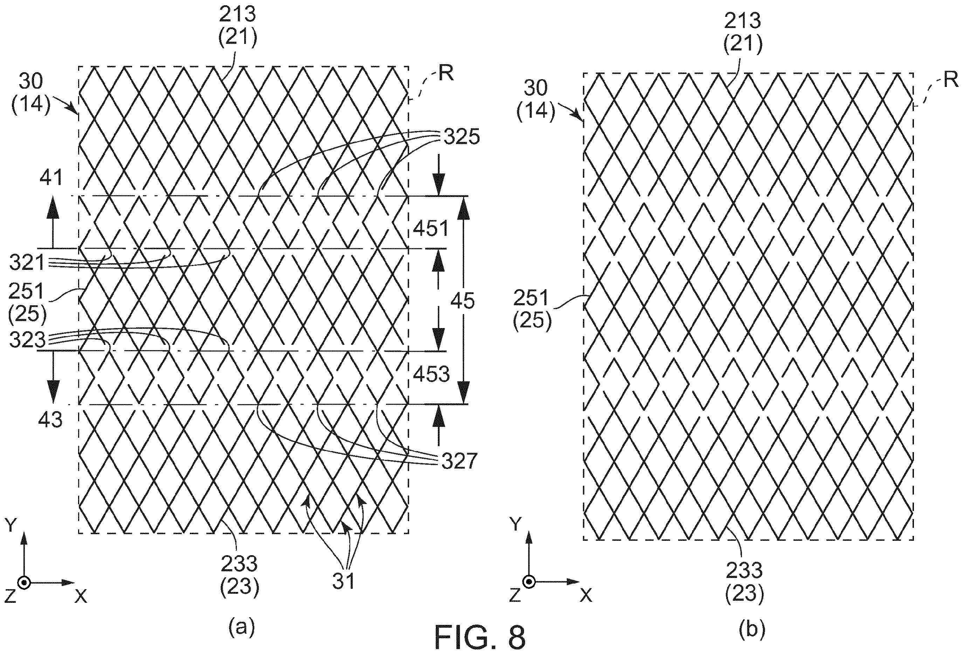

Figs. 8 (a) and 8 (b) are diagrams each of which shows a fifth modified example of the conductive mesh shown in Figs. 3 (a) and 3 (b), where Fig. 8 (b) is a diagram to which reference numerals necessary for the explanation are added, and where Fig. 8 (b) is a diagram identical to Fig. 8 (a) from which the reference numerals are removed in part.

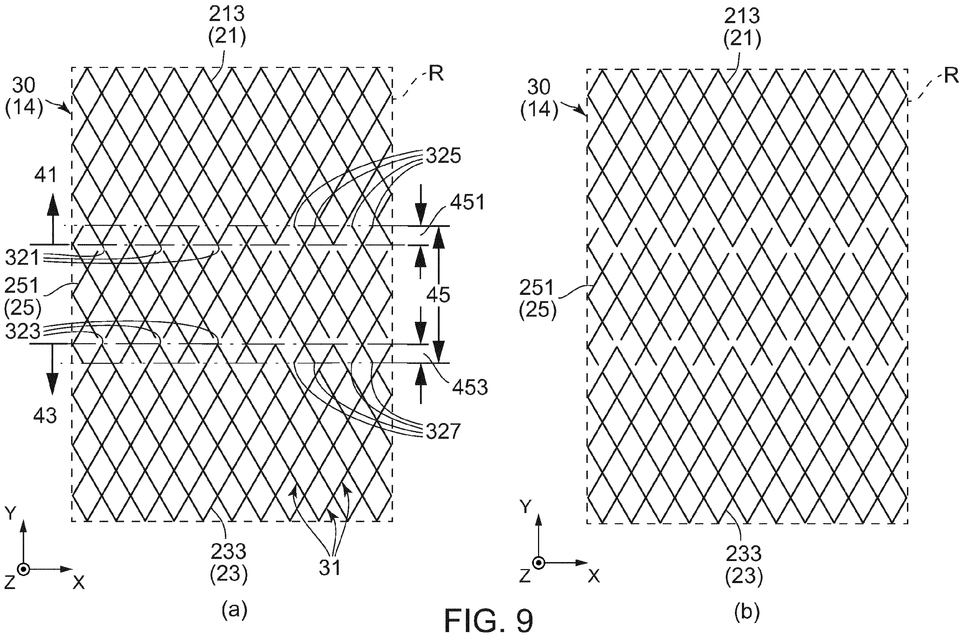

Figs. 9 (a) and 9 (b) are diagrams each of which shows a sixth modified example of the conductive mesh shown in Figs. 3 (a) and 3 (b), where Fig. 9 (b) is a diagram to which reference numerals necessary for the explanation are added, and where Fig. 9 (b) is a diagram identical to Fig. 9 (a) from which the reference numerals are removed in part.

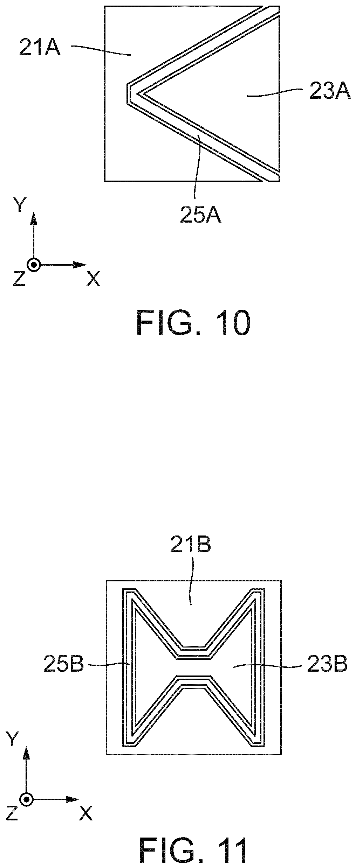

Fig. 10 is a diagram showing a modified example of the first electrode, the second electrode and the dummy electrode which are included in the touch panel of Fig. 2. The first electrode, the second electrode and the dummy electrode are simplified. The second electrode corresponds to one of the second electrodes of Fig. 2.
Fig. 11 is a diagram showing another modified example of the first electrode, the second electrode and the dummy electrode which are included in the touch panel of Fig. 2. The first electrode, the second electrode and the dummy electrode are simplified. The second electrode corresponds to one of the second electrodes of Fig. 2.
Fig. 12 is a plan view showing an electrode layer of a sensor portion included in a mutual capacitive system touch panel disclosed in Patent Document 1.

### Description of Embodiments

While the invention is susceptible of various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

Referring to Fig. 1, a mutual capacitive system touch panel (a touch panel) 10 according to a first embodiment of the present invention is provided with a base member 12, an electrode layer 14 formed on a surface of the base member 12 and a protective layer 16 provided on the surface of the base member 12 to cover the electrode layer 14.

In the touch panel 10 of Fig. 1, the base member 12 may be a plate-like or film-like member which is made of glass or resin to be optically transparent. The electrode layer 14 consists of a conductive mesh 30 (see Fig. 3) formed on the surface of the base member 12. The conductive mesh 30 may be formed on the surface of the base member 12 by printing using conductive ink or by etching a conductive layer formed on the surface of the base member 12 by vacuum deposition. The protective layer 16 may be formed by spin coating or printing using ink-like resin. Alternatively, the protective layer 16 may be formed by sticking a cover member made of glass or resin with adhesive.

Referring to Fig. 2, the electrode layer 14 is provided with a plurality of first electrodes 21, a plurality of second electrodes 23, a plurality of dummy electrodes 25 and a plurality of wirings 27. As described later, in the electrode layer 14 of the present embodiment, an area where each of the first electrodes 21 and the second electrodes 23 (a first area 41 or a second area 43: see Fig. 3) is formed overlaps with an area where any one of the dummy electrodes 25 is formed (a dummy area 45: see Fig. 3). In Fig. 2, however, in order to show schematic arrangement of the first electrodes 21, the second electrodes 23 and the dummy electrodes 25, there is a space between each of the first electrodes 21 and the second electrodes 23 and any one of the dummy electrodes 25.

As shown in Fig. 2, in the present embodiment, the first electrodes 21 are five in number, and the second electrodes 23 are twenty in number. Moreover, in the present embodiment, each of the first electrodes 21 is combined with four of the second electrodes 23. The wirings 27 are connected to the first electrodes 21 and the second electrodes 23, respectively. However, the present invention is not limited thereto. The number of the first electrodes 21 and the number of the second electrodes 23 may be freely set. In addition, the ratio of the number of the first electrodes 21 to the number of the second electrodes 23 may be freely set, where the first electrodes 21 and the second electrodes 23 are combined with each other. For example, the first electrodes 21 and the second electrodes 23 may be combined with each other one to one.

As shown in Fig. 2, each of the first electrodes 21 and the second electrodes 23 is formed to have comb teeth-like shape. In detail, each of the first electrodes 21 has a first main portion 211 extending along a predetermined direction and a plurality of first facing portions 213 extending from the first main portion 211 along a perpendicular direction perpendicular to the predetermined direction. Moreover, each of the second electrodes 23 has a second main portion 231 extending along the predetermined direction and a plurality of second facing portions 233 extending from the second main portion 231 along the perpendicular direction. In the present embodiment, the predetermined direction is a Y-direction, and the perpendicular direction is an X-direction. The first facing portions 213 extend from the first main portion 211 in a positive X-direction, and the second facing portions 233 extend from the second main portion 231 in a negative X-direction.

As shown in Fig. 2, in each of the combinations of the first electrodes 21 and the second electrodes 23, the first facing portions 213 and the second facing portions 233 are alternately arranged in the predetermined direction. In this structure, the first facing portion 213 and the second facing portion 233 which are adjacent to each other are apart from each other and face each other. With this structure, the first electrode 21 and each of the second electrodes 23 form a capacitor.

Referring to Fig. 3, the electrode layer 14 consists of the conductive mesh 30. The conductive mesh 30 has a pattern in which specific elements 31 are repeatedly arranged in two dimensions. In the present embodiment, the specific element 31 has a diamond shape. The specific element 31 is arranged so that two diagonal lines thereof are parallel to the predetermined direction and the perpendicular direction, respectively. However, the present invention is not limited thereto. The specific element 31 may have a shape other than the diamond shape.

As shown in Fig.3, the conductive mesh 30 has discontinuities between the first electrode 21 and the dummy electrode 25 and between the dummy electrode 25 and the second electrode 23. In other words, the conductive mesh 30 is divided between the first electrode 21 and the dummy electrode 25 and between the dummy electrode 25 and the second electrode 23. The division of the conductive mesh 30 is made so that an imaginary line cannot drawn each of between the first electrode 21 and the dummy electrode 25 and between the dummy electrode 25 and the second electrode 23.

As understood from Fig. 3, in the predetermined direction, the first facing portion 213 of the first electrode 21 and the second facing portion 233 of the second electrode 23 which are adjacent to each other are apart from each other and face each other. Between the first facing portion 213 and the second facing portion 233, an intervening portion 251 of the dummy electrode 25 intervenes. In other words, the dummy electrode 25 has the intervening portion 251 which is located between the first facing portion 213 and the second facing portion 233 at least in part.

As shown in Fig.3, the first facing portion 213 of the first electrode 21 is formed in the first area 41. The first area 41 is an area defined by imaginarily linking outermost ends 321 of a part of the conductive mesh 30 that forms the first facing portion 213. Moreover, the second facing portion 233 of the second electrode 23 is formed in the second area 43. The second area 43 is an area defined by imaginarily linking outermost ends 323 of a part of the conductive mesh 30 that forms the second facing portion 233.

Referring to Fig. 3, the description will be made about the first area 41 and the second area 43. In the present embodiment, the conductive mesh 30 has the pattern in which the specific elements 31 are repeatedly arranged in the perpendicular direction. The specific element 31 has a predetermined size as a maximum size in perpendicular direction. The predetermined size is equal to a length of the diagonal line of the specific element 31 in the perpendicular direction. In the present embodiment, the first area 41 is formed by imaginarily linking the outermost ends 321 of the area of the conductive mesh 30 that forms the first facing portion 213, wherein the outermost ends 321 are arranged at intervals of the predetermined size in the perpendicular direction. The line linking the outermost ends 321 form an edge along the perpendicular direction. In other words, the first area 41 has, as an end edge in the predetermined direction, an edge straightly extending in the perpendicular direction. Moreover, the second area 43 is formed by imaginarily linking the outermost ends 323 of the part of the conductive mesh 30 that forms the second facing portion 233, wherein the outermost ends 323 are arranged at intervals of the predetermined size in the perpendicular direction. The line linking the outermost ends 323 form an edge along the perpendicular direction. In other words, the second area 43 has, as an end edge in the predetermined direction, an edge straightly extending in the perpendicular direction.

As understood from Fig. 3, the intervening portion 251 of the dummy electrode 25 is formed in the dummy area 45. The dummy area 45 is an area defined by imaginarily linking outermost ends 325 and 357 of a part of the conductive mesh 30 that forms the intervening portion 251. The dummy area 45 has a first end area 451 and a second end area 453 as both end areas thereof in the predetermined direction. In the present embodiment, the first end area 451 is an area overlapping with the first area 41, the second end area 453 is an area overlapping with the second area 43.

As shown in Fig. 3, in the present embodiment, the intervening portion 251 has a plurality of first specific lines 331 parallel to one another in the first end area 451. Each of the first specific lines 331 corresponds to an edge of the diamond shape of the specific element 31. Strictly, each of the first specific lines 331 corresponds to a part of the edge of the diamond shape of the specific element 31. One the other hand, the first facing portion 213 has a plurality of first end lines 341 parallel to one another as an end portion thereof in the predetermined direction. Each of the first end lines 341 corresponds to an edge of the diamond shape of the specific element 31. Strictly, each of the first specific lines 331 corresponds to a part of the edge of the diamond shape of the specific element 31. Then, the first specific lines 331 and the first end lines 341 are alternately arranged in the perpendicular direction.

As shown in Fig. 3, the intervening portion 251 further has a plurality of second specific lines 333 parallel to one another in the second end area 453. Each of the second specific lines 333 corresponds to an edge of the diamond shape of the specific element 31. Strictly, each of the second specific lines 333 corresponds to a part of the edge of the diamond shape of the specific element 31. One the other hand, the second facing portion 233 has a plurality of second end lines 343 parallel to one another as an end portion thereof in the predetermined direction. Each of the second end lines 343 corresponds to an edge of the diamond shape of the specific element 31. Strictly, each of the second specific lines 333 corresponds to a part of the edge of the diamond shape of the specific element 31. Then, the second specific lines 333 and the second end lines 343 are alternately arranged in the perpendicular direction.

As understood from Fig. 3, the intervening portion 251 of the dummy electrode 25 enters each of the first area 41 and the second area 43 in part in the predetermined direction. In this structure, resolution of the touch panel 10 mainly depends on a shortest distance between the first electrode 21 and the second electrode 23 in the predetermined direction or a distance between the first area 41 and the second area 43 in the predetermined direction. On the other hand, sensitivity of the touch panel 10 mainly depends on a maximum width of the intervening portion 251 of the dummy electrode 25 in the predetermined direction or a width of the dummy area 45 in the predetermined direction. In the present embodiment, the width size of the dummy area 45 in the predetermined direction is larger than the shortest distance size between the first electrode 21 and the second electrode 23 in the predetermined direction. Accordingly, the touch panel 10 of the present embodiment can achieve high sensitivity at the same level as a case where an interval between the first electrode 21 and the second electrode 23 is widened without widening the interval. In other words, the touch panel 10 according to the present embodiment can improve the sensitivity without reducing the resolution.

### [Modification]

In the aforementioned embodiment, the conductive mesh 30 (see Fig. 3) is divided to form the first electrode 21, the second electrode 23 and the dummy electrode 25. In the present invention, a method for dividing the conductive mesh 30 is not limited in the aforementioned embodiment, but various methods can be employed.

For example, in the aforementioned embodiment, as shown in Fig. 3, the outermost ends 321 of the part of the conductive mesh 30 that forms the first facing portion 213 are arranged at intervals of the predetermined size in the predetermined direction. However, the present invention is not limited thereto. The outermost ends 321 of the part of the conductive mesh 30 that forms the first facing portion 213 may be arranged at intervals wider than the predetermined size at least in part in the perpendicular direction. For example, as shown in Fig. 4, the outermost ends 321 of the part of the conductive mesh 30 that forms the first facing portion 213 may be arranged at intervals of the predetermined size in the perpendicular direction so that one of the intervals is wider than others (First Modification). Alternatively, as shown in Fig. 5, the outermost ends 321 of the part of the conductive mesh 30 that forms the first facing portion 213 may be arranged at intervals of twice of the predetermined size in the perpendicular direction (Second Modification).

In the first modification shown in Fig. 4, the outermost ends 323 of the part of the conductive mesh 30 that forms the second facing portion 233 are arranged at intervals of the predetermined size in the perpendicular direction so that one of the intervals is wider than others. Moreover, in the second modification shown in Fig. 5, the outermost ends 323 of the part of the conductive mesh 30 that forms the second facing portion 233 are arranged at intervals of twice of the predetermined size in the perpendicular direction.

Moreover, in the aforementioned embodiment, as understood from Fig. 3, a size of each of the first end area 451 and the second end area 453 in the predetermined direction is approximately equal to a half of a length size of the diagonal line of the specific element 31 in the predetermined direction. However, the present invention is not limited thereto. As shown in Fig. 6, the size of each of the first end area 451 and the second end area 453 in the predetermined direction may be smaller than the half of the length size of the diagonal line of the specific element 31 in the predetermined direction (Third Modification). Moreover, as shown in Fig. 7, the size of each of the first end area 451 and the second end area 453 in the predetermined direction may be larger than the half of the length size of the diagonal line of the specific element 31 in the predetermined direction (Forth Modification).

Furthermore, in the aforementioned embodiment, as understood from Fig. 3, each of the outermost ends 325 and 327 of the part of the conductive mesh 30 that forms the intervening portion 251 corresponds to an end of an edge of the diamond of any one of the specific elements 31. However, the present invention is not limited thereto. As shown in Fig. 8, each of the outermost ends 325 and 327 of the part of the conductive mesh 30 that forms the intervening portion 251 may be an apex of the diamond of any one of the specific elements 31 (Fifth Modification).

Furthermore, in the first embodiment, as understood from Fig. 3, the outermost ends 325 and 327 of the part of the conductive mesh 30 that forms the intervening portion 251 correspond to one ends of the diamonds of the specific elements 31 different from one another, respectively. However, the present invention is not limited thereto. As shown in Fig. 9, adjacent two of the outermost ends 325 and 327 of the part of the conductive mesh 30 that forms the intervening portion 251 may correspond to ends of two edges of the diamond of the same specific element 31 (Sixth Modification).

In each of the first to sixth modifications shown in Figs. 4 to 9, the first area 41 is formed by imaginarily linking the outermost ends 321 of the part of the conductive mesh 30 that forms the first facing portion 213 at intervals of at least the predetermined size in the perpendicular direction. Similarly, the second area 43 is defined by imaginarily linking the outermost ends 323 of the part of the conductive mesh 30 that forms the second facing portion 233 at intervals of at least the predetermined size in the perpendicular direction.

Moreover, in each of the first to sixth modifications shown in Figs. 4 to 9, the intervening portion 251 of the dummy electrode 25 enters, in part, into each of the first area 41 and the second area 43 in the predetermined direction. Accordingly, also in each of these modifications, the touch panel 10 can improve the sensitivity without reducing the resolution.

Although the specific explanation about the present invention is made above referring to the embodiments, the present invention is not limited thereto but susceptible of various modifications and alternative forms without departing from the spirit of the invention. For example, although each of the first electrode 21 and the second electrode 23 is formed into the comb teeth-like shape as shown in Fig. 2 in the aforementioned embodiment, the present invention is not limited thereto. In an example, as shown in Fig. 10, a second electrode 23Amay be formed into a triangle shape, and a first electrode 21A has a shape corresponding thereto. Alternatively, as shown in Fig. 11, a second electrode 23B may be formed into a bobbin-like shape, and a first electrode 21B may has a shape corresponds thereto.

In the example shown in Fig. 10, each of two directions perpendicular to the Z-direction and intersecting with both of the X-direction and the Y-direction is the predetermined direction. Between the first electrode 21A and the second electrode 23A, a dummy electrode 25A is formed. Similarly to the embodiment shown in Fig. 3 or the modification shown in each of Figs. 4 to 9, a dummy area 45 where the intervening portion 251 of the dummy electrode 25A is formed overlaps with, in each of the predetermined directions, each of a first area 41 and a second area 43 where the first electrode 21A and the second electrode 23A are formed, respectively.

Moreover, in the example shown in Fig. 11, each of four directions, i.e., the X-direction, the Y-direction and two directions perpendicular to the Z-direction and intersecting with both of the X-direction and the Y-direction, is the predetermined direction. Similarly to the embodiment shown in Fig. 3 or the modification shown in each of Figs. 4 to 9, a dummy area 45 where the intervening portion 251 of the dummy electrode 25B is formed overlaps with, in each of the predetermined directions, each of a first area 41 and a second area 43 where the first electrode 21B and the second electrode 23B are formed, respectively.

The present invention is based on a Japanese patent application of JP2019-097788 filed with the Japan Patent Office on May 24, 2019, the content of which is incorporated herein by reference.

While there has been described what is believed to be the preferred embodiment of the invention, those skilled in the art will recognize that other and further modifications may be made thereto without departing from the spirit of the invention, and it is intended to claim all such embodiments that fall within the true scope of the invention.

### Reference Signs List

- 10: mutual capacitive system touch panel (touch panel)
- 12: base member
- 14: electrode layer
- 16: protective layer
- 21, 21a, 21b: first electrode
- 23, 23a, 23b: second electrode
- 25, 25a, 25b: dummy electrode
- 251: intervening portion
- 27: wiring
- 211: first main portion
- 213: first facing portion
- 231: second main portion
- 233: second facing portion
- 30: conductive mesh
- 31: specific element
- 321, 323, 325, 327: outermost end
- 331: first specific line
- 333: second specific line
- 341: first end line
- 343: second end line
- 41: first area
- 43: second area
- 45: dummy area
- 451: first end area
- 453: second end area

## Claims

1. A touch panel comprising a base member and an electrode layer formed on the base member, wherein:
the electrode layer is made of a conductive mesh and comprises a first electrode, a second electrode and a dummy electrode;
the first electrode has a first facing portion;
the first facing portion is formed in a first area;
the second electrode has a second facing portion;
the second facing portion is formed in a second area;
the first facing portion and the second facing portion are apart from each other and face each other in a predetermined direction;
the dummy electrode has an intervening portion located between the first facing portion and the second facing portion at least in part;
the intervening portion is formed in a dummy area;
the dummy area has a first end area and a second end area as both end areas thereof in the predetermined direction;
the first area and the first end area overlap with each other; and
the second area and the second end area overlap with each other.

2. The touch panel as recited in claim 1, wherein:
the first area is formed by imaginarily linking outermost ends of a part of the conductive mesh that forms the first facing portion;
the second area is formed by imaginarily linking outermost ends of a part of the conductive mesh that forms the second facing portion; and
the dummy area is formed by imaginarily linking outermost ends of a part of the conductive mesh that forms the intervening portion.

3. The touch panel as recited in claim 2, wherein:
the conductive mesh has a pattern in which specific elements are repeatedly arranged in a perpendicular direction perpendicular to the predetermined direction;
the specific element has a predetermined size as a maximum size in the perpendicular direction;
the first area is formed by imaginarily linking the outermost ends of the part of the conductive mesh that forms the first facing portion at intervals of at least the predetermined size in the perpendicular direction;
the first area has an edge linearly extending along the perpendicular direction as an end edge in the predetermined direction;
the second area is formed by imaginarily linking the outermost ends of the area of the conductive mesh that forms the second facing portion at intervals of at least the predetermined size in the predetermined direction; and
the second area has an edge linearly extending along the perpendicular direction as an end edge in the predetermined direction.

4. The touch panel as recited in claim 3; wherein:
the specific element has a diamond shape;
the intervening portion has a plurality of first specific lines parallel to one another in the first end area;
each of the first specific lines corresponds to one edge of the diamond shape of the specific element;
the first facing portion has a plurality of first end lines parallel to one another as an end portion in the predetermined direction;
each of the first end lines corresponds to one edge of the diamond shape of the specific element;
the first specific lines and the fist end lines are alternately arranged in the perpendicular direction;
the intervening portion has a plurality of second specific lines parallel to one another in the second end area;
each of the second specific lines corresponds to one edge of the diamond shape of the specific element;
the second facing portion has a plurality of second end lines parallel to one another as an end portion in the predetermined direction;
each of the second end lines corresponds to one edge of the diamond shape of the specific element; and
the second specific lines and the second end lines are alternately arranged in the perpendicular direction.

5. The touch panel as recited in claim 4, wherein:
the first electrode has a first main portion extending along the predetermined direction and a plurality of the first facing portions extending from the first main portion along the perpendicular direction;
the second electrode has a second main portion extending in the predetermined direction and a plurality of the second facing portions extending from the second main portion; and
the first facing portions and the second facing portions are alternately arranged in the predetermined direction.
